# EUROPEAN PATENT APPLICATION

(11) **EP 4 517 240 A1**
(43) Date of publication of application: **05.03.2025**
(21) Application number: 23820121.4
(22) Date of filing: 08.06.2023
(51) Int. Cl.: F27B 7/22, F27B 7/32, F27D 3/08, H01M 4/36

(54) **ELECTRODE MATERIAL FIRING SYSTEM**

(30) Priority: 10.06.2022 KR 20220070534
(71) Applicant: LG Chem, Ltd., Yeongdeungpo-gu Seoul 07336 (KR)
(72) Inventor: YOON, Jong Seol, Daejeon 34122 (KR); RYOO, Chang Seok, Daejeon 34122 (KR); NHO, Jun Seok, Daejeon 34122 (KR)
(74) Representative: Hoffmann Eitle
(86) International application number: PCT/KR2023/007890
(87) International publication number: WO 2023/239186

(57) **Abstract**

The present invention relates an electrode material sintering system. The electrode material sintering system according to the present invention includes: an electrode material sintering device configured to sinter a raw material for an electrode material; and an electrode material supply device configured to supply the raw material for the electrode material to the electrode material sintering device, wherein the electrode material supply device includes: a supply tube in which an inner space, into which the raw material for the electrode material is accommodated to move, is defined; a cooling part configured to cool the inner space of the supply tube; and a heating part configured to heat the outside of the supply tube.

## Description

### TECHNICAL FIELD

### CROSS-REFERENCE TO RELATED APPLICATION

The present application claims the benefit of the priority of Korean Patent Application No. 10-2022-0070534, filed on June 10, 2022, which is hereby incorporated by reference in its entirety.

### TECHNICAL FIELD

The present invention relates to an electrode material sintering system.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

Secondary batteries are attracting much attention as energy sources for power devices such as electric bicycle, electric vehicles, and hybrid electric vehicles as well as mobile devices such as mobile phones, digital cameras, and laptops.

In the lithium secondary battery, lithium transition metal oxide is used as a positive electrode active material. That is, lithium cobalt oxide having a high operating voltage and excellent capacity characteristics, lithium nickel oxide having a high reversible capacity of about 200 mAh/g and easy implementation of large-capacity batteries, lithium nickel cobalt oxide in which a portion of nickel is substituted with cobalt, lithium nickel cobalt metal oxide in which a portion of nickel is substituted with manganese, cobalt or aluminum, low-cost lithium manganese oxide having excellent thermal stability, lithium iron phosphate having excellent stability, and the like are being used as the positive electrode active material.

The positive electrode active material is prepared by mixing a precursor for producing the positive electrode active material with the lithium raw material and then putting the mixture into an electrode material sintering system to perform sintering at a high temperature.

In the conventional electrode material sintering system in which a raw material for the electrode material is sintered by applying heat, the electrode material supply device that supplies an electrode material has a simple structure constituted by a screw and a supply tube that is a case surrounding the screw to move the raw material for the electrode material. In addition, the electrode material sintering system is configured as a structure in which an end of the supply tube is disposed inside a main tube that heats and sinters the raw material to supply the raw material for the electrode material into the main tube.

However, there is a problem that the raw material input by heat conduction from the inside of the main tube is heated from a portion of the end of the supply tube.

As a result, the raw material containing moisture generated by thermal decomposition generates stress inside the supply tube to cause a problem in that durability of an equipment is deteriorated.

In addition, as a result, there is a problem that an error occurring in quantitative input of the raw material that is one of important process conditions due to a change in power characteristic (density, viscosity, flow, etc.) of the raw material by the moisture.

In addition, as a result, there is a problem that an error in process control occurring due to generation of intermediate products by thermal reaction that is not controlled in area except for a reaction area in terms of a process design.

### DISCLOSURE OF THE INVENTION

### TECHNICAL PROBLEM

One aspect of the present invention is to provide an electrode material sintering system capable of preventing undesired additional thermal reaction from occurring.

### TECHNICAL SOLUTION

An electrode material sintering system according to the present invention may include: an electrode material sintering device configured to sinter a raw material for an electrode material; and an electrode material supply device configured to supply the raw material for the electrode material to the electrode material sintering device, wherein the electrode material supply device includes: a supply tube in which an inner space, into which the raw material for the electrode material is accommodated to move, is defined; a cooling part configured to cool the inner space of the supply tube; and a heating part configured to heat the outside of the supply tube.

### ADVANTAGEOUS EFFECTS

According to the present invention, in the electrode material sintering system that sinters the raw material for the electrode material, the cooling part that cools the inner space of the supply tube through which the raw material for the electrode material moves may be provided to prevent the undesired additional thermal reaction from occurring. Thus, there may be the effect of preventing the durability of the equipment from being deteriorated, preventing the problem in quantitative input of the raw material from occurring, and preventing the undesired intermediate products from being generated to prevent the error in process control from occurring.

In addition, the heating part for heating the outside of the supply tube may be provided to prevent the vapor generated by the thermal reaction from being condensed at the outside of the supply tube and then being mixed again with the raw material or prevent the feeding from being interrupted by blocking the outlet of the supply tube.

In addition, the insulating part may be disposed between the cooling part and the heating part to block the heat transfer between the cooling part and the heating part, and thus, the respective functions of the cooling part and the heating part may be effectively performed.

### BRIEF DESCRIPTION OF THE DRAWINGS

FIG. 1 is a schematic cross-sectional view of an electrode material sintering system according to a first embodiment of the present invention.
FIG. 2 is a schematic cross-sectional view of an electrode material sintering system according to a second embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Electrode material sintering system according to first embodiment

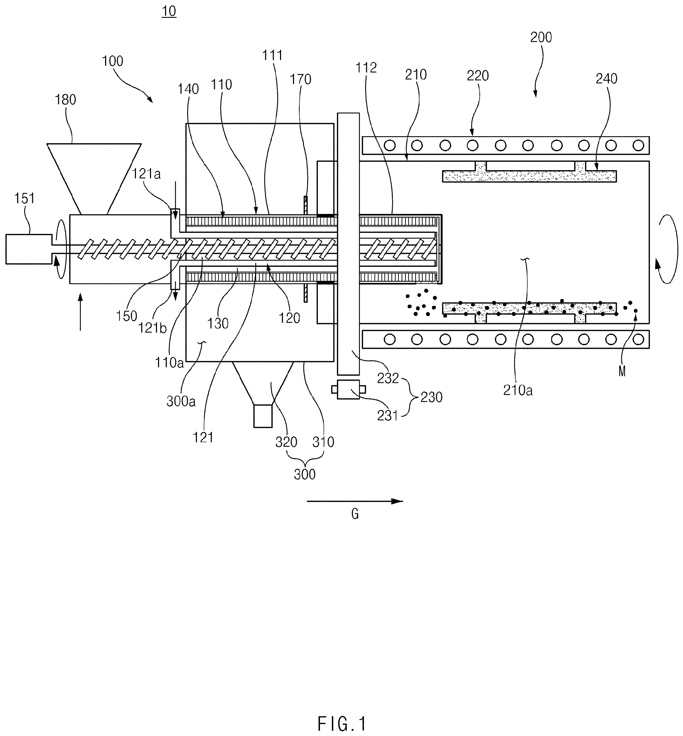

FIG. 1 is a schematic cross-sectional view of an electrode material sintering system according to a first embodiment of the present invention. Here, a rotating part 230 illustrated in FIG. 1 is not cross-sectioned for convenience of description.

Referring to FIG. 1, an electrode material sintering system 10 according to the first embodiment of the present invention includes an electrode material sintering device 200 that sinters a raw material M for an electrode material, and an electrode material supply device 100 that supplies the raw material M for the electrode material to the electrode material sintering device 200. In addition, the electrode material sintering system 10 according to the first embodiment of the present invention may further include a chamber 300 that collects a gas and water vapor discharged from a heating tube 210.

In addition, the electrode material supply device 100 may include a supply tube 110 through which the raw material M for the electrode material moves, a cooling part 120, a heating part 140, an insulating part 130, a screw 150, a blocking part 170, and a supply hopper 180.

In addition, the electrode material sintering device 200 may include a heating tube 210 through which the raw material for the electrode material moves from the supply tube 110, a heater 220, a rotating part 230, and a baffle 240.

In more detail, in the electrode material supply device 100 of the electrode material sintering system 10 according to the first embodiment of the present invention, the supply tube 110 may have an inner space 110a in which the raw material M for the electrode material is accommodated to move. Here, the raw material M for the electrode material may be, for example, a raw material for a positive electrode material.

The supply tube 110 may be provided in a tubular shape. Here, the supply tube 110 may be provided in, for example, a cylindrical tubular shape.

The supply tube 110 may include a first portion 111 disposed outside the heating tube 210 and a second portion 112 disposed inside the heating tube 210.

Here, the heating part 140 and the cooling part 120 may be installed at the first portion 111 and the second portion 112 of the supply tube 110. That is, the heating part 140 and the cooling part 120 may be installed at portions disposed inside and outside the heating tube 210 in the supply tube 110.

The cooling part 120 may cool the inner space 110a of the supply tube 110.

The cooling part 120 may include a cooling line 121 through which a coolant fluid moves and of which surrounding is maintained below a certain temperature.

Here, the raw material M for the electrode material may include lithium hydroxide, and the cooling part 120 may cool the inner space 110a of the supply tube 110, for example, so that a temperature of the raw material M for the electrode material becomes 10°C to 80°C. Here, the cooling part 120 may specifically cool the inner space 110a of the supply tube 110, for example, so that the temperature of the raw material M for the electrode material becomes 10°C to 60°C. Therefore, the cooling part 120 may cool the inner space 110a of the supply tube 110 so that the temperature of the raw material M for the electrode material becomes 60°C or less to prevent additional thermal reaction that is not desired and not controlled on an area except for an reaction area in the process design from occurring, thereby preventing intermediate products from being generated so that an error in process control is prevented from occurring. As a result, the raw material containing moisture generated by pyrolysis may generate stress in the supply tube 110 to prevent durability of equipment from being deteriorated, and it is effective in preventing an error in quantitative input of the raw material, which is one of important process conditions, from occurring due to a change in powder characteristic (density, viscosity, flow, etc.) of the raw material due to the moisture.

In addition, the cooling part 120 may cool the inner space 110a of the supply tube 110 so that the temperature of the raw material M for the electrode material becomes 10°C or more to prevent the addition thermal reaction or deterioration of the raw material from occurring.

The cooling line 121 may include a coolant inlet 121a through which a coolant fluid flows and a coolant outlet 121b through which the coolant fluid is discharged.

The cooling part 120 may be provided along an inner surface of the insulating part 130.

The heating part 140 may heat the outside of the supply tube 110.

The heating part 140 may heat the outside of the supply tube 110 to a temperature of 100°C to 150°C. Thus, as the heating part 140 heats the outside of the supply tube 110 to the temperature of 100°C or more, there is an effect of suppressing that the vapor generated by the thermal reaction in the heating tube 210 is condensed at the outside of the supply tube 110 and then is mixed again with the raw material or preventing the feeding from being interrupted by blocking the outlet of the supply tube. In addition, as the heating part 140 heats the outside of the supply tube 110 to a temperature of 150°C or less, the higher the heating temperature, the lower cooling efficiency to increase in temperature of the raw material. Thus, there is an effect that the raw material is injected while being maintained within a predetermined temperature range.

The heating part 140 may be provided along the inner surface of the supply tube 110 to heat the supply tube 110 and the outside of the supply tube 110.

The insulating part 130 may be disposed between the cooling part 120 and the heating part 140 to block the heat transfer between the cooling part 120 and the heating part 140. Thus, each function of the cooling part 120 and the heating part 140 may be sufficiently exhibited.

The insulating part 130 may be provided along the inner surface of the heating part 140.

The screw 150 may be disposed in the inner space 110a of the supply tube 110 to allow the raw material M for the electrode material to move.

The screw 150 may have, for example, a rotating shaft and a spiral wing shape along an outer circumferential surface of the rotating shaft.

An end of the screw 150 may be connected to a screw motor 151 to rotate through the screw motor 151, and the raw material M for the electrode material disposed in the inner space 110a of the supply tube 110 may move toward the heating tube 210.

The blocking part 170 may be provided on an outer surface of the supply tube 110, and the condensed vapor disposed on the outer surface of the supply tube 110 may be prevented from moving to the inside of the electrode material sintering device 200 along the outer surface of the supply tube 110.

The blocking part 170 may be provided as a metal plate provided along the outer circumference of the supply tube 110.

The blocking part 170 may be provided in a circular plate shape with a hole defined at a central portion thereof, and the hole defined at the central portion may be inserted into the outer surface of the supply tube 110.

The supply hopper 180 may supply the raw material M for the electrode material to the supply tube 110.

Here, the supply hopper 180 may be connected to one side of the supply tube 110, and the other side of the supply tube 110 may be disposed inside the heating tube 210.

In the electrode material sintering device 200, the heating tube 210 may define an accommodation space 210a in which the raw material M for the electrode material moves from the supply tube 110 so as to be accommodated.

The heating tube 210 may be provided in a tubular shape. Here, the heating tube 210 may be provided in, for example, a cylindrical tubular shape. In addition, the heating tube 210 may be provided in a shape having a diameter greater than that of the supply tube 110.

The heater 220 may heat the heating tube 210 to heat the raw material M for the electrode material disposed in the accommodation space 210a of the heating tube 210.

The heating tube 210 may rotate by the rotating part 230.

The rotating part 230 may include a driving gear 231 providing rotational force and a driven gear 232 receiving the rotational force from the driving gear 231.

A driving gear part may be disposed on an outer circumferential surface of the driving gear 231, and the driving gear 231 may rotate as the rotating shaft of the driving motor rotates.

The driven gear 232 is disposed along the outer surface of the heating tube 210, and a driven gear part engaged with the driving gear part of the driving gear 231 may be disposed on the outer circumferential surface.

The baffle 240 may be provided inside the heating tube 210 to induce stirring of the raw material M for the electrode material accommodated in the heating tube 210 when the heating tube 210 rotates.

The baffle 240 may be installed inside the heating tube 210. The baffle 240 may include a horizontal bar provided at a predetermined distance from the inner surface of the heating tube 210. The horizontal bar may extend along a longitudinal direction of the heating tube 210. Here, the horizontal bar may extend, for example, in a direction parallel to a traveling direction G of the raw material M for the electrode material.

The chamber 300 may have a space accommodating the first portion 111 of the supply tube 110. Here, the chamber 300 may include a cylindrical chamber cover 310 and a chamber hopper 320 disposed below the chamber cover 310.

The chamber 300 may collect a gas and vapor discharged from the first portion 111 of the heating tube 210.

Here, the gas and vapor discharged from the outside of the heating tube 210 may be collected into the chamber hopper 320 by the chamber cover 310.

### Electrode material sintering system according to second embodiment

Hereinafter, an electrode material sintering system according to a second embodiment of the present invention will be described.

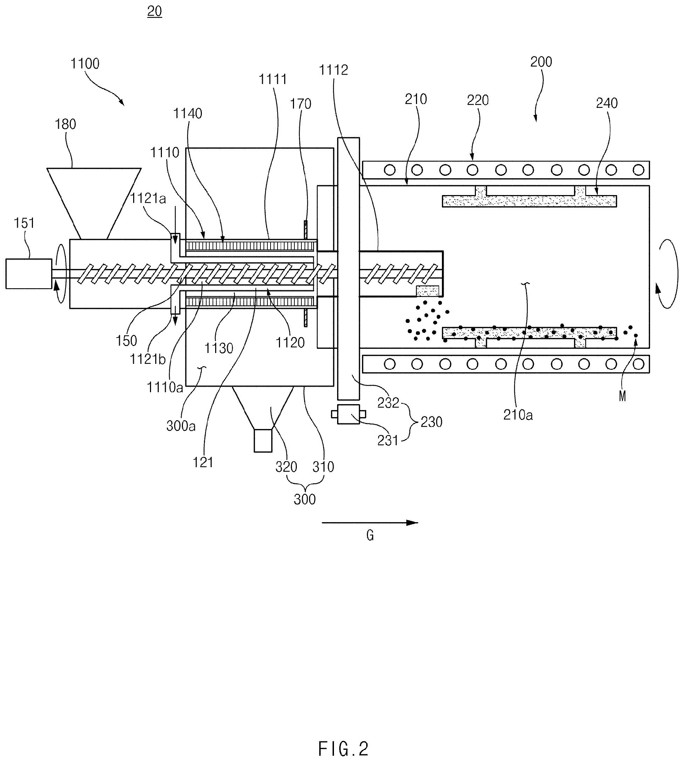

FIG. 2 is a schematic cross-sectional view of an electrode material sintering system according to a second embodiment of the present invention.

Referring to FIG. 2, an electrode material sintering system 20 according to the second embodiment of the present invention includes an electrode material sintering device 200 that sinters a raw material M for an electrode material, and an electrode material supply device 1100 that supplies the raw material M for the electrode material to the electrode material sintering device 200. In addition, the electrode material sintering system 20 according to the second embodiment of the present invention may further include a chamber 300 that collects a gas and water vapor discharged from a heating tube 210.

In addition, the electrode material supply device 1100 may include a supply tube 1110 through which the raw material M for the electrode material moves, a cooling part 1120, a heating part 1140, an insulating part 1130, a screw 150, a blocking part 170, and a supply hopper 180.

In addition, the electrode material sintering device 200 may include a heating tube 210 through which the raw material for the electrode material moves from the supply tube 1110, a heater 220, a rotating part 230, and a baffle 240.

When compared to the electrode material sintering system according to the first embodiment of the present invention described above, the electrode material sintering system according to the second embodiment of the present invention has a difference in that the heating part 1140 and the cooling part 1120 are installed only at a first portion 1111. Therefore, in the embodiment of the electrode material sintering system 20 according to the second embodiment, duplicated contents with the electrode material sintering system according to the first embodiment will be omitted or briefly described, and the differences therebetween will be mainly described.

In more detail, in the electrode material supply device 1100 of the electrode material sintering system 20 according to the second embodiment of the present invention, the supply tube 1110 may have an inner space 1110a in which the raw material M for the electrode material is accommodated to move.

The supply tube 1110 may be provided in a tubular shape. Here, the supply tube 1110 may be provided in, for example, a cylindrical tubular shape.

The supply tube 1110 may include a first portion 1111 disposed outside the heating tube 210 and a second portion 1112 disposed inside the heating tube 210.

Here, the heating part 1140 and the cooling part 1120 may be installed at the first portion 1111 of the supply tube 1110. That is, the heating part 1140 and the cooling part 1120 may be installed at a portion disposed outside the heating tube 210 in the supply tube 1110. Thus, the heating part 1140 and the cooling part 1120 may not be installed at a second portion 1112 of the supply tube 1110, which is disposed inside the heating tube 210, to prevent a heating temperature within the heating tube 210 from decreasing, thereby facilitating manufacturing thereof.

The cooling part 1120 may cool the inner space 1110a of the supply tube 1110.

The cooling part 1120 may include a cooling line 1121 through which a coolant fluid moves and of which surrounding is maintained below a certain temperature.

Here, the raw material M for the electrode material may include lithium hydroxide, and the cooling part 1120 may cool the inner space 1110a of the supply tube 1110 so that a temperature of the raw material M for the electrode material becomes 10°C to 60°C.

The cooling line 1121 may include a coolant inlet 1121a through which a coolant fluid flows and a coolant outlet 1121b through which the coolant fluid is discharged.

The cooling part 1120 may be provided along an inner surface of the insulating part 1130.

The heating part 1140 may heat the outside of the supply tube 1110.

The heating part 1140 may heat the outside of the supply tube 1110 to a temperature of 100°C to 150°C.

The heating part 1140 may be provided along the inner surface of the supply tube 1110 to heat the supply tube 1110 and the outside of the supply tube 1110.

The insulating part 1130 may be disposed between the cooling part 1120 and the heating part 1140 to block the heat transfer between the cooling part 1120 and the heating part 1140.

The insulating part 1130 may be provided along the inner surface of the heating part 1140.

The screw 150 may be disposed in the inner space 1110a of the supply tube 1110 to allow the raw material M for the electrode material to move.

While the present invention has been particularly shown and described with reference to exemplary embodiments thereof, it is to be understood that the scope of the present invention is not limited thereto. It will be understood by those of ordinary skill in the art that various changes in form and details may be made therein without departing from the spirit and scope of the present invention.

Furthermore, the scope of protection of the present invention will be clarified by the appended claims.

### [Description of the Symbols]

10,20: Electrode material sintering system
100,1100: Electrode material supply device
110,1110: Supply tube
110a,1110a: Inner space
111,1111: First portion
112,1112: Second portion
120,1120: Cooling part
121,1121: Cooling line
121a,1121a: Coolant inlet
121b,1121b: Coolant outlet
130,1130: Insulating part
140,1140: Heating part
150: Screw
151: Screw motor
170: Blocking part
180: Supply hopper
200: Electrode material sintering device
210: Heating tube
210a: Accommodation space
220: Heater
230: Rotating part
231: Driving gear
232: Driven gear
240: Baffle
300: Chamber
300a: Space
310: Chamber cover
320: Chamber hopper
G: Traveling direction
M: Raw material for electrode material

## Claims

1. An electrode material sintering system comprising:
an electrode material sintering device configured to sinter a raw material for an electrode material; and
an electrode material supply device configured to supply the raw material for the electrode material to the electrode material sintering device,
wherein the electrode material supply device comprises:
a supply tube in which an inner space, into which the raw material for the electrode material is accommodated to move, is defined;
a cooling part configured to cool the inner space of the supply tube; and
a heating part configured to heat an outside of the supply tube.

2. The electrode material sintering system of claim 1, wherein the cooling part comprises a cooling line through which a coolant fluid moves to maintain surroundings thereof to a temperature below a certain temperature.

3. The electrode material sintering system of claim 2, wherein the raw material for the electrode material comprises lithium hydroxide, and
the cooling part cools the inner space of the supply tube so that a temperature of the raw material for the electrode material becomes 10°C to 60°C.

4. The electrode material sintering system of claim 2, wherein the cooling line comprises:
a coolant inlet into which the coolant fluid is introduced; and
a coolant outlet through which the coolant fluid is discharged.

5. The electrode material sintering system of claim 1, wherein the electrode material supply device further comprises a screw disposed in the inner space of the supply tube to allow the raw material for the electrode material to move.

6. The electrode material sintering system of claim 1, wherein the heating part is configured to heat the outside of the supply tube to a temperature of 100°C to 150°C.

7. The electrode material sintering system of claim 1, further comprising an insulating part disposed between the cooling part and the heating part to block heat transfer between the cooling part and the heating part.

8. The electrode material sintering system of claim 7, wherein the supply tube is provided in a tube-shaped tubular shape,
the heating part is provided along an inner surface of the supply tube to heat the supply tube and the outside of the supply tube,
the insulating part is provided along an inner surface of the heating part, and
the cooling part is provided along an inner surface of the insulating part.

9. The electrode material sintering system of claim 1, wherein the electrode material supply device further comprises a blocking part provided on an outer surface of the supply tube to block vapor condensed on the outer surface of the supply tube from moving into the electrode material sintering device along the outer surface of the supply tube.

10. The electrode material sintering system of claim 9, wherein the blocking part is provided as a metal plate provided along a circumference of the outer surface of the supply tube.

11. The electrode material sintering system of claim 1, wherein the electrode material sintering device comprises:
a heating tube in which an accommodation space, into which the raw material for the electrode material moves from the supply tube so as to be accommodated, is defined; and
a heater configured to heat the heating tube so as to heat the raw material for the electrode material disposed in the accommodation space of the heating tube.

12. The electrode material sintering system of claim 11, wherein the supply tube comprises:
a first portion disposed outside the heating tube; and
a second portion disposed inside the heating tube.

13. The electrode material sintering system of claim 12, wherein the heating part and the cooling part are installed at the first portion of the supply tube.

14. The electrode material sintering system of claim 12, wherein the heating part and the cooling part are installed at the first portion and the second portion of the supply tube.

15. The electrode material sintering system of claim 12, further comprising a chamber in which a space, into which the first portion of the supply tube is accommodated, is defined,
wherein the chamber is configured to collect a gas and vapor discharged from the first portion of the heating tube.

16. The electrode material sintering system of claim 11, wherein the electrode material sintering device comprises:
a rotating part configured to allow the heating tube to rotate; and
a baffle provided inside the heating tube to induce stirring of the raw material for the electrode material accommodated in the heating tube when the heating tube rotates.
